# EUROPEAN PATENT APPLICATION

(11) **EP 1 595 481 A1**
(43) Date of publication of application: **16.11.2005**
(21) Application number: 04292284.9
(22) Date of filing: 23.09.2004
(51) Int. Cl.: A47J 37/06

(54) **Double heating-type two-sided frying pans**

(30) Priority: 10.05.2004 KR 2004032693
(71) Applicant: Kim, Myung-suk, Yesan-gun, Chungcheongnam-do (KR)
(72) Inventor: Kim, Myung-suk, Yesan-gun, Chungcheongnam-do (KR)
(74) Representative: Joly, Jean-Jacques

(57) **Abstract**

Disclosed herein is a double heating-type two-sided frying pan (50). The frying pan includes hot air holes (22) to introduce heated air into the frying pan. A guide unit (60) is provided on an outer surface of the frying pan to efficiently guide the heated air to the hot air holes. Thus, the two-sided frying pan (50) of this invention allows conduction heat conducted through a bottom of the frying pan and convection heat transferred through the hot air holes (22) to eliminate a temperature difference between upper and lower portions in the frying pan, therefore reducing cooking time, and evenly heating food.

## Description

### BACKGROUND OF THE INVENTION

### Field of the Invention

The present invention relates generally to double heating-type two-sided frying pans, and more particularly, to a double heating-type two-sided frying pan, which includes hot air holes to introduce heated air into the frying pan, and which includes a guide unit on an outer surface of the frying pan to efficiently guide the heated air to the hot air holes, thus allowing heat conducted through the bottom of the frying pan and convection heat transferred through the hot air holes to eliminate a temperature difference between upper and lower portions in the frying pan, therefore reducing cooking time, and evenly heating food.

### Description of the Related Art

Generally, cooking utensils, such as pots and frying pans, are used for cooking food at homes or in restaurants.

Frying pans are shallow and wide containers that are used to pan-fry or fry desired food in greased pans. Frying pans have been widely used for cooking food in kitchens.

Generally, frying pans are constructed so that only one surface thereof is heated by a gas range when cooking food. Recently, two-sided frying pans have been widely used, which are constructed so that both surfaces thereof are heated by a gas range when cooking food.

The two-sided frying pan is designed such that two pans are connected to each other. Thus, a user may turn the frying pan itself over during cooking, thus allowing food to be evenly cooked without turning the food over.

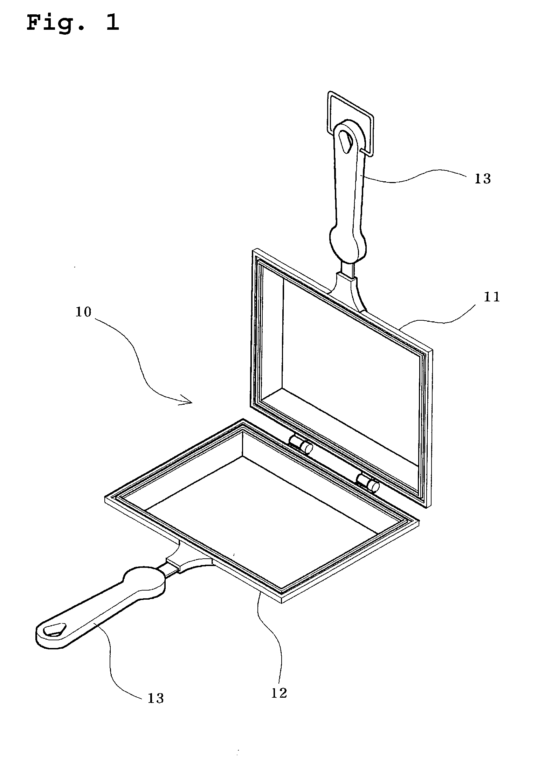

FIG. 1 is a view to show the conventional two-sided frying pan.

As shown in FIG. 1, the two-sided frying pan 10 is made of a material having excellent heat conductivity, such as stainless steel or aluminum. The frying pan 10 includes first and second pans 11 and 12 which are hinged to each other, with a handle 13 provided on an end of each of the first and second pans 11 and 12.

However, the two-sided frying pan has a problem in that the first and second pans are provided separately, so that heat is not easily transmitted to the second pan when the first pan is directly heated by a gas range, thus causing a temperature difference between upper and lower portions in the frying pan. Thereby, food is not evenly heated, and cooking time is undesirably increased.

### SUMMARY OF THE INVENTION

Accordingly, the present invention has been made keeping in mind the above problems occurring in the prior art, and an object of the present invention is to provide a double heating-type two-sided frying pan, which includes hot air holes at predetermined positions on a pair of pans to introduce heated air into the frying pan, thus allowing conduction heat conducted through an outer surface of the frying pan and convection heat transferred through the hot air holes to eliminate a temperature difference in the frying pan, thereby reducing cooking time, and allowing food to be evenly cooked.

Another object of the present invention is to provide a double heating-type two-sided frying pan, which includes a guide unit on an outer surface of the frying pan to guide heated air, thus enhancing heat efficiency.

In order to accomplish the above object, the present invention provides a double heating-type two-sided frying pan, including a first pan having a first plate to hold food thereon, with a first handle provided at a predetermined position on the first plate, and at least one first hot air hole formed at a predetermined position on the first plate, and a second pan having a shape corresponding to that of the first pan to be hinged to the first pan, and having a second plate to hold food thereon, with a second handle provided at a predetermined position on the second plate, and at least one second hot air hole formed at a predetermined position on the second plate.

In the two-sided frying pan constructed as described above, when one of the plates is heated by a heating means, part of the heated air flows through hot air holes into the frying pan, thus allowing food to be rapidly and evenly heated.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view to show a conventional two-sided frying pan;
FIG. 2 is a perspective view to show a two-sided frying pan, according to the present invention;
FIG. 3 is a side sectional view to illustrate heat transfer in the two-sided frying pan of FIG. 2; and
FIG. 4 is a view to show a guide unit provided on an outer surface of the two-sided frying pan of FIG. 2.

### DESCRIPTION OF THE PREFERRED EMBODIMENTS

Hereinafter, an embodiment of the present invention will be described in detail with reference to the attached drawings.

The preferred embodiment of the present invention is disclosed for illustrative purposes, and it is to be understood that the invention is not limited to the preferred embodiment thereof. Those elements common to both the prior art and this invention will carry similar reference numerals.

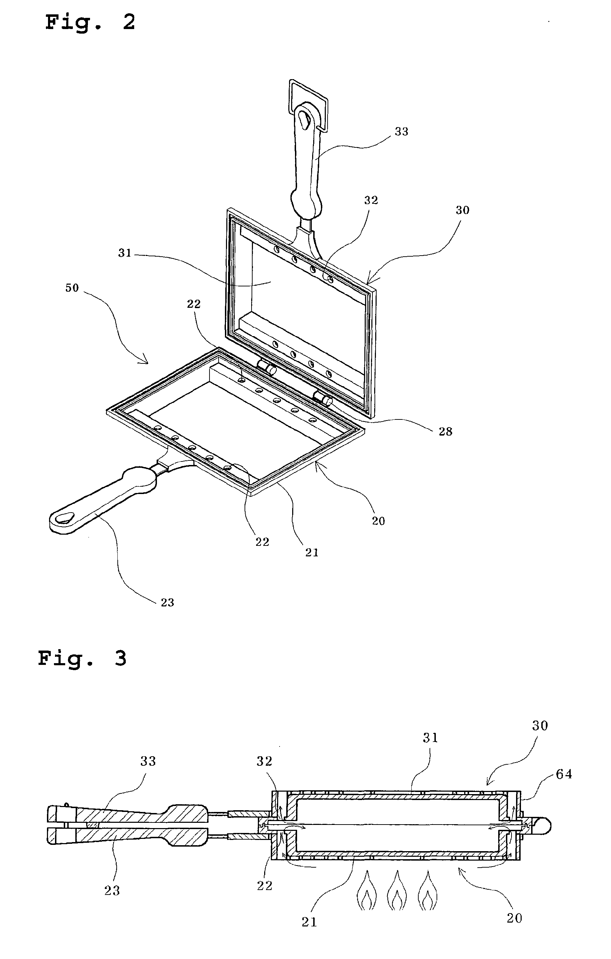

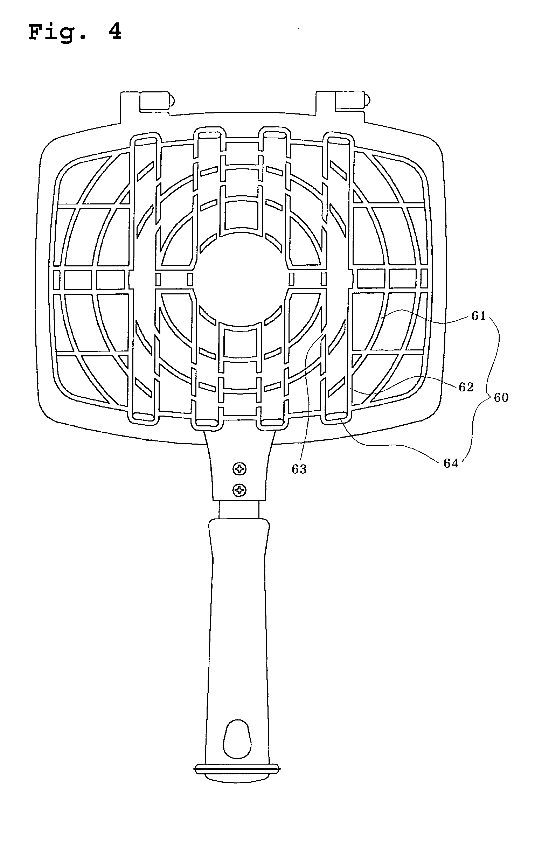

FIG. 2 is a perspective view to show a two-sided frying pan, according to the present invention, FIG. 3 is a side sectional view to illustrate heat transfer in the two-sided frying pan of FIG. 2, and FIG. 4 is a view to show a guide unit provided on an outer surface of the two-sided frying pan of FIG. 2.

As shown in the drawings, the two-sided frying pan 50 includes first and second pans 20 and 30 that have corresponding shape and are connected to each other by hinges 28. The construction of the two-sided frying pan 50 will be described below in detail.

The first pan 20 includes a first plate 21 having space to contain food therein. A first handle 23 is provided at a predetermined position on the first plate 21, and one or more first hot air holes 22 are formed at predetermined positions on the first plate 21.

The second pan 30 has a shape corresponding to that of the first pan 20. The second pan 30 includes a second plate 31 having space to contain food therein. A second handle 33 is provided at a predetermined position on the second plate 31, and one or more second hot air holes 32 are formed at predetermined positions on the second plate 31.

In this case, the first and second pans 20 and 30 are connected to each other by the hinges 28, thus allowing food to be cooked while storing the food in the frying pan.

Either the first pan 20 or the second pan 30 is directly heated by the heating means. It is preferable that the first and second hot air holes 22 and 32 be offset from each other, when the first and second pans 20 and 30 come into contact with each other.

The two-sided frying pan is manufactured through die casting or casting. Preferably, the two-sided frying pan is made of a material having excellent heat conductivity, such as stainless steel or aluminum alloy.

The first and second hot air holes 22 and 32 may be formed when the frying pan is manufactured through casting. Alternatively, after external construction of the frying pan is completed, the first and second hot air holes 22 and 32 may be formed by punching out predetermined portions of the frying pan.

Further, on an outer surface of each of the first and second plates 21 and 31 is provided a guide unit 60 to guide heated air to each of the first and second hot air holes 22 and 32.

The guide unit 60 may have various shapes to efficiently guide heated air to each of the first and second hot air holes 22 and 32. As shown in FIG. 4, a plurality of circular protrusions 61 having different diameters is concentrically provided on a bottom of each of the first and second plates 21 and 31.

Many pairs of guide protrusions 62 are provided on the bottom of each of the first and second plates 21 and 31 to cross the circular protrusions 61, thus guiding heated air.

Further, guide ducts 64 are provided on both side walls of each of the first and second plates 21 and 31 to communicate with space defined between the guide protrusions 62, thus guiding heated air to the first and second hot air holes 22 and 32.

A plurality of air guide gaps 63 is provided at predetermined positions on the guide protrusions 62 located between neighboring circular protrusions 61, thus guiding heated air.

Similarly, air guide gaps 63 are provided at predetermined positions on the circular protrusions 61 located between a pair of guide protrusions 62, thus guiding heated air.

Preferably, the circular protrusions 61 are provided on the bottom of the outer surface of each of the plates 21 and 31, and the guide protrusions 62 extend from the bottom to the side walls of each of the plates 21 and 31.

The operation and operational effect of this invention constructed as described above are as follows.

When the first pan 20 is placed under the second pan 30, heat, such as flames, generated by a heating means such as a gas range, comes into contact with the outer surface of the first plate 21 of the two-sided frying pan 50, thus heating the frying pan 50.

In this case, flames are directly in contact with the bottom of the first plate 21, thus heating the first plate 21. On the other hand, the second plate 31 is heated by heat transmitted from the first plate 21 and convection heat of air heated by the heating means.

At this time, as shown in FIG. 3, part of the air directly heating the first plate 21 flows through the first hot air holes 22 into the two-sided frying pan 50, thus heating the upper layer in the frying pan 50 and thereby eliminating a temperature difference between upper and lower portions in the frying pan 50.

Further, air heated and expanded in the two-sided frying pan 50 is discharged through the second hot air holes 32 to the outside.

Meanwhile, when the second pan 30 is directly heated by the heating means, the heated air flows through the second hot air holes 32 into the frying pan 50, and is discharged through the first hot air holes 22 to the outside.

For easy understanding of this invention, the first and second hot air holes 22 and 32 are shown in FIG. 3, as if they were aligned in a row. However, actually, the first and second hot air holes 22 and 32 are offset from each other.

Thus, hot air fed through the first hot air holes 22 is not immediately discharged through the second hot air holes 32, but circulates in the frying pan 50, thus reducing heat loss.

According to the present invention, food is heated both by heat conducted through the first or second plate 21 or 31 and convection heat transferred through the first or second hot air holes 22 or 32 to the frying pan 50, thus reducing cooking time.

Moreover, the present invention eliminates a temperature difference between the upper and lower portions in the two-sided frying pan 50, thus heating upper and lower portions of food simultaneously. Thereby, a user does not need turn the frying pan over to evenly heat food.

The guide unit 60 is provided on the outer surface of each of the first and second plates 21 and 31, thus efficiently guiding hot air into the first and second hot air holes 22 and 32. The movement of hot air will be described below.

When flames generated by the gas range or the like heat the bottom of the first or second plate 21 or 31, the heated air moves between neighboring circular protrusions 61 and is concentrated at a pair of guide protrusions 62 through the air guide gaps 63.

Further, air flowing along the guide protrusions 62 is guided by the guide ducts 64 to prevent the drain of the air to the outside, so that the air flows upward while being fed into the first or second hot air holes 22 and 32.

Thus, the guide unit 60 prevents heated air from being dispersed into the atmosphere, so that the air is fed through the hot air holes 22 or 32 into the two-sided frying pan 50, thus enhancing heating efficiency of the frying pan 50.

Further, the guide unit 60 protrudes from the outer surface of the frying pan 50 to increase the contact area with the heating means, thus increasing heat conduction efficiency.

As described above, the present invention provides a double heating-type two-sided frying pan, which is capable of rapidly heating an interior of the frying pan using both conduction heat and convection heat, thus reducing cooking time.

Further, the present invention eliminates a temperature difference between upper and lower portions in the two-sided frying pan, so that a user need not turn food over, different from a conventional pan which requires that food be turned over to be evenly heated during cooking.

Furthermore, according to the present invention, a guide unit guides heated air to hot air holes while preventing the dispersion of the heated air, thus enhancing energy efficiency.

## Claims

1. A double heating-type two-sided frying pan, comprising:
a first pan including a first plate to hold food thereon, with a first handle provided at a predetermined position on the first plate, and at least one first hot air hole formed at a predetermined position on the first plate; and
a second pan having a shape corresponding to that of the first pan to be hinged to the first pan, and including a second plate to hold food thereon, with a second handle provided at a predetermined position on the second plate, and at least one second hot air hole formed at a predetermined position on the second plate.

2. The double heating-type two-sided frying pan according to claim 1, wherein the first and second hot air holes are offset from each other, when the first and second pans come into contact with each other.

3. The double heating-type two-sided frying pan according to claim 1, further comprising:
a guide unit provided on an outer surface of each of the first and second plates to guide heated air into the first and second hot air holes.

4. The double heating-type two-sided frying pan according to claim 3, wherein the guide unit comprises:
a plurality of circular protrusions concentrically arranged on a bottom of each of the first and second plates and having different diameters;
many pairs of guide protrusions crossing the circular protrusions to guide heated air;
a guide duct provided on a sidewall of each of the first and second plates to communicate with a space defined between each pair of guide protrusions, thus guiding the heated air to the first and second hot air holes; and
air guide gaps provided at predetermined positions on the guide protrusions located between neighboring circular protrusions, and at predetermined positions on the circular protrusions located between a pair of guide protrusions, thus guiding the heated air.
